(19) Europäisches Patentamt
European Patent Office
Office européen des brevets

(11) **EP 3 229 042 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(51) Int Cl.:
*G01S 17/08* (2006.01)    *G01S 7/481* (2006.01)
*G01S 7/497* (2006.01)    *G02B 3/08* (2006.01)

(21) Anmeldenummer: **17156213.5**

(22) Anmeldetag: **15.02.2017**

(54) **OPTOELEKTRONISCHER SENSOR UND VERFAHREN ZUR ERFASSUNG UND ENTFERNUNGSBESTIMMUNG EINES OBJEKTS**

OPTOELECTRONIC SENSOR AND METHOD FOR DETECTING AN OBJECT AND MEASURING THE DISTANCE TO IT

CAPTEUR OPTOÉLECTRONIQUE ET PROCÉDÉ DE DÉTECTION ET DE DÉTERMINATION DE DISTANCE PAR RAPPORT À UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2016 DE 102016106154**

(43) Veröffentlichungstag der Anmeldung:
**11.10.2017 Patentblatt 2017/41**

(73) Patentinhaber: **Sick AG**
**79183 Waldkirch (DE)**

(72) Erfinder:
• **Gimpel, Hartmut**
**79194 Gundelfingen (DE)**
• **Feise, Gerold**
**22335 Hamburg (DE)**

(56) Entgegenhaltungen:
DE-A1- 2 826 233    DE-A1- 10 130 763
DE-B- 1 036 534    US-A- 4 829 172
US-A- 5 311 271    US-B2- 7 382 441

## Beschreibung

Die Erfindung betrifft einen optoelektronischen Sensor und ein Verfahren zur Erfassung und Entfernungsbestimmung eines Objekts nach dem Oberbegriff von Anspruch 1 beziehungsweise 9.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen. Diese Art der Abstandsmessung wird auch als ToF (Time of Flight) oder LIDAR (Light Detection and Ranging) bezeichnet.

Um den Messbereich zu erweitern, kann der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. In den meisten Laserscannern wird die Abtastbewegung durch einen Drehspiegel erreicht. Es ist aber auch bekannt, stattdessen den gesamten Messkopf mit Lichtsendern und Lichtempfängern rotieren zu lassen, wie dies beispielsweise in DE 197 57 849 B4 beschrieben ist.

Um den von dem angetasteten Objekt zurückgeworfenen Lichtanteil zu erfassen, ist dem Lichtempfänger eine Empfangsoptik vorgeordnet, die in der Regel als Empfangslinse ausgestaltet ist. Die Funktion dieser Linse ist, alles auftreffende Licht auf den vergleichsweise kleinen Lichtempfänger zu führen. Der effektive Durchmesser der Empfangslinse beziehungsweise dessen Eintrittspupille bestimmt, welche Lichtmenge der Sensor noch detektiert, und hat daher entscheidenden Einfluss auf die Messreichweite.

Die Brennweite der Empfangslinse, oder genauer die Schnittweite beziehungsweise die gesamte Weglänge des Abbildungssystems von der Frontseite der vordersten Linse bis zum Brennpunkt mit dem Empfangselement, erfordert eine minimale Gehäuseabmessung des Sensors, wobei diese Anforderung durch einen mit Umlenkspiegel gefalteten Strahlengang noch abgemildert werden kann.

Somit ist es vorteilhaft, eine Empfangslinse mit einer großen Empfangspupille für eine hohe Reichweite und zugleich mit einer kurzen Brennweite für eine kleine Bauform zu verwenden. Nun arbeitet eine klassische Linse ausschließlich mit dem Effekt der Lichtbrechung und hat eine stetige Oberflächenkontur. Je nach Brechungsindex $n$ des Linsenmaterials können Lichtstrahlen nur um einen maximalen Winkel $\alpha < arcsin(1/n)$ abgelenkt werden, beispielsweise $\alpha < 42°$ für $n=1,5$. In realistisch verwendbaren Linsen wird der maximale Öffnungswinkel durch die zunehmende Stärke des Fresnel-Reflexes weiter verringert, im Zahlenbeispiel $n=1.5$ auf ca. $\alpha = 30°$. Für Einzellinsen in klassischer Bauweise ergibt sich so eine maximal mögliche Blendenzahl $k=f/D=1$ mit Brennweite $f$ und Durchmesser $D$. Die typischerweise in herkömmlichen Sensoren eingesetzten Empfangslinsen weisen diese maximale Blendenzahl auf, haben also einen maximalen effektiven Linsendurchmesser von $D=f$. Damit muss eine höhere Reichweite mit einer größeren Bauform erkauft werden beziehungsweise umgekehrt eine kleine Bauform mit Verzicht auf Reichweite. Eine Sammellinse mit Blendenzahl 1 hat zudem eine große Mittendicke, die bei der Herstellung durch Prozesse wie Kunststoff-Spritzguss oder Glaspressen deutlich höhere Kosten verursacht als eine dünne Linse. Das große Linsenvolumen führt auch zu einem großen Linsengewicht, das ganz besonders nachteilig ist, wenn in einem Laserscanner die Empfangslinse die Abtastbewegung mitvollzieht.

Prinzipiell sind im Stand der Technik schlankere Sonderbauformen von Linsen bekannt. Eine Fresnel-Linse arbeitet wie eine klassische Linse ausschließlich mit Lichtbrechung, jedoch ist ihre Oberflächenkontur in mehrere ringförmige Abschnitte aufgebrochen, so dass eine deutlich flachere, gestufte Außenkontur entsteht. Fresnel-Linsen haben im Vergleich zu ihrem klassischen Pendant eine deutlich kompaktere Bauform und ein verringertes Gewicht. Fresnel-Linsen werden herkömmlich beispielsweise als Beleuchtungslinsen eingesetzt, nicht aber in gattungsgemäßen abstandsmessenden Sensoren, weil sie die Lichtlaufzeit verfälschen. Entfernungsmesser mit Fresnel-Linsen sind aus US 5,311,271 oder US 4,829,172 bekannt. Vor allem aus der Anwendung in historischen Leuchttürmen sind weiterhin sogenannte Gürtellinsen bekannt. Sie arbeiten in ihrem Innenbereich mit Lichtbrechung wie eine klassische Linse oder eine Fresnel-Linse. Zusätzlich ist ein Außenbereich mit Totalreflextion (TIR, total internal reflection) vorgesehen, um das Licht auch von dort noch in den Brennpunkt umzulenken. Gürtellinsen können eine Blendenzahl kleiner als 1 erreichen, weil sie die im Außenbereich notwendigen sehr großen Ablenkwinkel durch Spiegelung beziehungsweise Totalreflexion erreichen, die mit reiner Lichtbrechung nicht möglich sind. Die Verfälschungen der Lichtlaufzeit einer Fresnel-Linse werden durch die unterschiedlichen Ablenkprinzipien der Gürtellinse aber nur noch verstärkt, so dass eine Gürtellinse im Stand der Technik erst recht nicht für die Verwendung in einem gattungsgemäßen abstandsmessenden Sensor in Betracht gezogen wird.

Es ist daher Aufgabe der Erfindung, die Empfangsoptik eines nach dem Lichtlaufzeitprinzip entfernungsmessenden optoelektronischen Sensors zu verbessern.

Diese Aufgabe wird durch einen entfernungsmessenden optoelektronischen Sensor und ein Verfahren zur Erfassung und Entfernungsbestimmung eines Objekts nach Anspruch 1 beziehungsweise 9 gelöst. Dabei geht die Erfindung von dem Grundgedanken aus, eine Stufen- oder Fresnel-Linse beziehungsweise eine Gürtellinse in der Empfangsoptik einzusetzen. Der durch diese besonderen Linsen eingeführte systematische abstandsabhängige Laufzeitfehler ist in der Auswertungseinheit oder einem Speicher des Sensors abgelegt und wird insbesondere während des laufenden Messbetriebs korrigiert. Die gemessenen Abstandsmesswerte werden um einen im Sensor hinterlegten oder berechneten Korrekturwert vergrößert oder verkleinert.

Die Erfindung hat den Vorteil, dass eine Fresnel-Linse oder Gürtellinse ohne nachteilige Auswirkungen auf die Messgenauigkeit einsetzbar wird. Eine Fresnel-Linse ermöglicht verringerte Herstellkosten und eine reduzierte Baulänge der optischen Empfangseinheit. Das gegenüber einer klassischen Linse deutlich verringerte Gewicht bedeutet vor allem bei mitbewegten Empfangslinsen einen erheblichen Gewinn. Die alternativ einsetzbare Gürtellinse soll zunächst allgemein verstanden werden als eine beliebige Linse, die in ihrem Außenbereich mit Totalreflexion arbeitet. Dadurch wird eine verkleinerte Blendenzahl ermöglicht, oder praktisch ausgedrückt mehr Reichweite oder eine kleinere Bauform.

Die Beziehung ist bevorzugt in Form von Wertepaaren aus Abstand und Laufzeitabweichung aufgrund der Fresnel-Linse oder Gürtellinse gespeichert. Die Beziehung ist demnach diskret gespeichert, beispielsweise als Wertetabelle. Der Begriff Laufzeitabweichung oder Laufzeitfehler ist weit zu verstehen und die direkt daraus ableitbaren Größen wie den Abstandsfehler. Insbesondere wird auch ein Wertepaar aus gemessenem Abstand und korrigiertem Abstand als Wertepaar von Abstand und Laufzeitabweichung aufgefasst.

Besonders bevorzugt sind Wertepaare nur punktuell für den Nahbereich und den Fernbereich oder den Nahbereich, einen mittleren Bereich und den Fernbereich. Die Beziehung ist also nur an ganz wenigen Stützstellen bekannt, um den Aufwand bei der Bestimmung sowie den Speicheraufwand zu begrenzen. Mit einem Nah- und Fernfehler, eventuell einem weiteren Zwischenwert für mittlere Entfernungen, kann der durch die Fresenel-Linse oder Gürtellinse eingeführte systematische Laufzeitfehler schon zu einem großen Anteil korrigiert werden. Sogar nur ein einziges Wertepaar für einen mittleren Laufzeitfehler verringert diesen Laufzeitfehler schon signifikant.

Die Auswertungseinheit ist bevorzugt dafür ausgebildet, die Beziehung zu interpolieren. Damit genügt es, die Beziehung nur an bestimmten Stützstellen zu kennen, und dennoch wird auch dazwischen durch Interpolation eine genaue Kompensation erzielt.

Die Beziehung ist bevorzugt als Formel gespeichert. Anstelle fester Werte wird also eine Rechenvorschrift verwendet, die einem gemessenen Abstand einen durch die Fresnel-Linse oder die Gürtellinse eingeführten systematischen Laufzeitfehler oder auch direkt den darum korrigierten Abstandswert zuordnet.

Die Gürtellinse ist bevorzugt als Fresnel-Linse mit einem äußeren TIR-Bereich ausgebildet. Es handelt sich dann um eine spezielle Gürtellinse, deren Innenbereich keine klassische Linse, sondern eine Stufenlinse ist. Dadurch werden beide Vorteile eines äußeren TIR-Bereichs für kleinere Blendenzahl und der verringerten Linsendicke einer Fresnel-Linse vereinigt.

Lichtsender und Lichtempfänger sind bevorzugt in einem biaxialen Aufbau mit ihren optischen Achsen parallel zueinander ausgerichtet. Die optischen Achsen können genauso auf Sendeoptik beziehungsweise Empfangsoptik bezogen werden. Bei einem biaxialen Aufbau verschiebt sich der Schwerpunkt des Empfangsflecks mit dem Abstand des angetasteten Objekts durch den Triangulationseffekt. Die äußeren Bereiche der Fresnel-Linse oder der Gürtellinse tragen deshalb bei kleineren Abständen deutlich stärker zum Empfangslichtfleck bei als bei großen Abständen. Das ist die wesentliche Ursache für die erfindungsgemäß korrigierte Laufzeitabweichung, die demnach bei einem biaxialen Aufbau besonders plastisch zutage tritt.

Alternativ sind Lichtsender und Lichtempfänger in einem koaxialen Aufbau mit gleichen optischen Achsen ausgerichtet. Dabei kann der Lichtsender sich physisch im Empfangslichtpfad des Lichtempfängers befinden und dessen Zentrum verdecken. Als koaxial werden aber andere Anordnungen beispielsweise mit einem Strahlteiler zum Koppeln auf die gemeinsame optische Achse bezeichnet. In einem koaxialen Aufbau verschiebt sich zwar der Schwerpunkt des Empfangslichtflecks nicht mit verändertem Abstand des angetasteten Objekts, aber es verändert sich die Größe des Empfangslichtflecks. Wenn sich der Lichtsender vor dem Lichtempfänger befindet, wird außerdem die zentrale Abschattung im Nahbereich größer. Dadurch kommt es hier zu dem Effekt, dass im Nahbereich die inneren Bereiche der Fresnel-Linse oder Gürtellinse stärker ins Gewicht fallen. Die Korrektur ist daher analog zum biaxalen Aufbau, auch wenn die konkreten Zahlenwerte der Beziehung natürlich von dem konkreten Aufbau abhängen.

Der Sensor ist bevorzugt als Laserscanner ausgebildet und weist dafür eine bewegliche Ablenkeinheit zur periodischen Ablenkung des Lichtstrahls in dem Überwachungsbereich auf. Dadurch wird der Überwachungsbereich vergrößert. Insbesondere für Laserscanner mit mitbewegter Empfangsoptik ist das erfindungsgemäß reduzierte Linsengewicht besonders vorteilhaft.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Beziehung wird bevorzugt im Optikdesign der Fresnel-Linse oder der Gürtellinse mitbestimmt. Sie wird also direkt aus den im Geräte-Design festgelegten optischen Eigenschaften Fresnel-Linse oder Gürtellinse abgeleitet. Damit kann die Korrekturlogik bei der Auswertung sehr einfach und unabhängig vom konkreten Gerät erfolgen. Es ist aber auch denkbar, die Beziehung individuell einzulernen, beispielsweise in einer Kalibrierung während der Produktion.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische Schnittdarstellung eines entfernungsmessenden optoelektronischen Sensors;

Fig. 2    eine qualitative Darstellung des durch eine Fresnel-Linse eingeführten systematischen Laufzeitfehlers in Abhängigkeit vom Abstand;

Fig. 3    eine erläuternde Darstellung von Lage und Größe des Empfangslichtflecks in Abhängigkeit vom Abstand bei biaxialem Aufbau des Sensors;

Fig. 4    eine erläuternde Darstellung von Lage und Größe des Empfangslichtflecks in Abhängigkeit vom Abstand bei koaxialem Aufbau des Sensors;

Fig. 5    eine Darstellung des Dickenunterschieds der Stufen einer Fresnel-Linse im Vergleich zu einer klassischen Linse; und

Fig. 6    eine Darstellung der durch die Dickenunterschiede gemäß Figur 5 verursachten Laufzeitfehler.

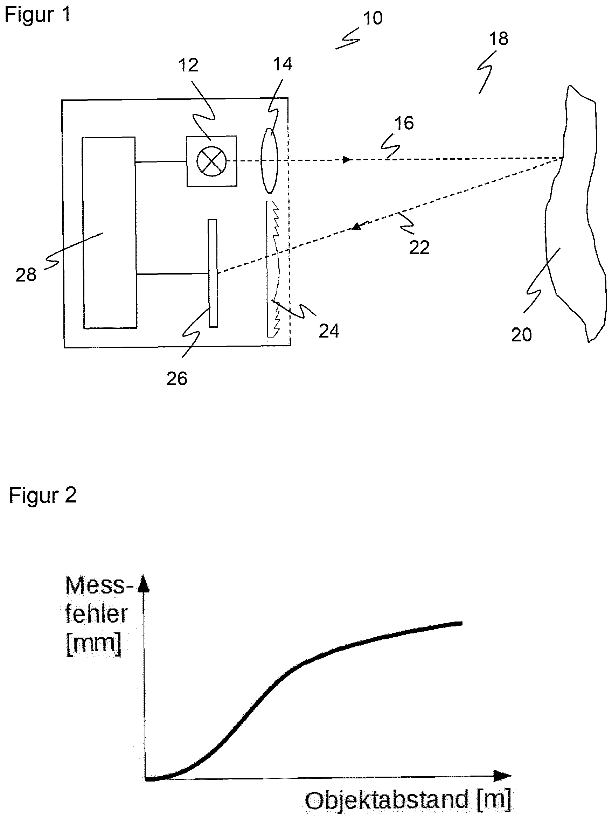

Figur 1 zeigt eine schematische Schnittdarstellung eines entfernungsmessenden optoelektronischen Sensors 10. Ein Lichtsender 12, beispielsweise ein Laser oder eine LED, sendet über eine Sendeoptik 14 einen Lichtstrahl 16 in einen Überwachungsbereich 18. Trifft der Lichtstrahl 16 dort auf ein Objekt 20, so kehrt ein Teil des Lichts als remittierter Lichtstrahl 22 zu dem Sensor 10 zurück und wird dort von einer Empfangsoptik 24 auf einen Lichtempfänger 26 gebündelt, der als Photodiode, APD (Avalanche Photodiode) oder SPAD (Single-Photon Avalanche Photodiode) ausgebildet ist.

Eine Auswertungseinheit 28 steuert den Sender 12 und wertet das Empfangssignal des Lichtempfängers aus, um den Abstand des Objekts 20 zu bestimmen. Das dabei eingesetzte Lichtlaufzeitverfahren kann ein Einzelpuls- oder Mehrpulsverfahren, aber auch ein Phasenverfahren sein und ist an sich bekannt.

Die Empfangsoptik 24 weist eine Stufenlinse oder Fresnel-Linse auf. Eine Fresnel-Linse weist eine Vielzahl von ringförmigen Stufen auf und erreicht so verglichen mit einer klassischen Linse gleicher Brennweite eine wesentlich geringere Dicke.

Beim Einsatz einer Fresnel-Linse in dem Sensor 10 sind mehrere Punkte zu beachten. Ein Teil der Empfangsapertur wird von den steilen Flanken der gestuften Linse unbrauchbar gemacht. Dort auftreffendes Licht wird nicht wie gewünscht auf den Lichtempfänger 26 umgelenkt. Derartiges Streulicht kann sogar auf Umwegen durch weitere Streuungen, Brechungen und Reflexionen doch noch den Lichtempfänger erreichen, hat dabei aber eine völlig unberechenbare Laufzeit. Da der Anteil steiler Flanken an der Gesamtfläche relativ klein ist, geht nur wenig Empfangslicht verloren, und nur ein Teil des Streulichts wird dann tatsächlich auf Umwegen noch empfangen, so dass diese Effekte nicht besonders ins Gewicht fallen.

Ein spürbarer nachteiliger Effekt der Fresnel-Linse dagegen ist, dass der optische Weg für die unterschiedlichen Linsenzonen nicht mehr gleichlang ist. Für klassische Linsen ist das aufgrund des Fermatschen Prinzips noch der Fall. Daher kommt empfangenes Licht, das durch unterschiedliche Zonen der Fresnel-Linse läuft, mit einem jeweils unterschiedlichen Laufzeitunterschied am Lichtempfänger 26 an. Derartige Laufzeitunterschiede führen dann zu einem systematischen Messfehler bei der Bestimmung der Lichtlaufzeit und damit des Abstands des Objekts 20.

Die Auswertungseinheit 28 kennt die Beziehung zwischen den durch die Fresnel-Linse eingeführten Laufzeitunterschieden in Abhängigkeit von der gemessenen Lichtlaufzeit und besitzt eine Korrekturlogik, um diesen systematischen Fehler zu korrigieren. Dabei wird der Begriff Lichtlaufzeit stellvertretend für die eigentliche Lichtlaufzeit und den dazu proportionalen Abstand verwendet. Die Beziehung ist in Form von Wertepaaren oder einer Korrekturtabelle, alternativ als Berechnungsvorschrift in der Auswertungseinheit 28 oder einem nicht dargestellten Speicher des Sensors 10 abgelegt. Eine qualitative und quantitative Analyse der Laufzeitfehler sowie Wege zur Bestimmung der durch die Fresnel-Linse verursachten Laufzeitunterschiede folgen weiter unten mit Bezugnahme auf die Figuren 2 bis 6.

Eine nicht dargestellte Alternative zu der Fresnel-Linse bietet eine Gürtellinse. Allgemein ist das eine Sammellinse mit einem umgebenden TIR-Bereich. Vorzugsweise ist die innere Sammellinse nicht klassisch ausgebildet, obwohl das möglich ist, sondern selbst eine Fresnel-Linse. Im Rahmen der weiteren Figurenbeschreibung werden alle diese Linsenformen zur sprachlichen Vereinfachung nur als Fresnel-Linse genannt, da sich die Analysen und Fehlerkorrekturen auf eine Gürtellinse mit innerer klassischer Linse oder innerer Fresnel-Linse übertragen lassen.

Die Lichtumlenkung im TIR-Bereich einer Gürtellinse verursacht wie die Zonen der Fresnel-Linse einen Laufzeitfehler, der korrigiert wird. Als Nebenbemerkung soll noch auf die verschärften Toleranzanforderunen an den TIR-Bereich hingewiesen werden: In einer brechenden Fläche einer Fresnel-Zone verursacht ein Steigungsfehler von 1° bei einem Brechungsindex n=1,5 nur eine Abweichung von 0,5°. Die gleiche Toleranz von 1° bei Reflexion in dem TIR-Bereich dagegen führt zu einer Abweichung der Strahlablenkung von 2°, d. h. dem Vierfachen. Entsprechend genauer muss der TIR-Bereich gefertigt sein.

Figur 1 zeigt eine beispielhafte biaxiale Bauform des Sensors 10. Die Erfindung ist darauf nicht beschränkt.

So ist auch eine koaxiale Anordnung von Lichtsender 12 und Lichtempfänger 26 oder die Verwendung mehrerer Messstrahlen durch mehrere Lichtsender oder Aufspaltung des Sendelichtstrahls möglich, wie überhaupt jegliche an sich bekannte Ausführungsform eines nach einem Lichtlaufzeitprinzip arbeitenden Sensors, der eine Empfangsoptik aufweist. Dann kann nämlich stets die Empfangsoptik mit einer Fresnel-Linse versehen und deren systematischer Laufzeitfehler korrigiert werden. Ein noch explizit genanntes Beispiel ist ein Laserscanner mit beweglichem Spiegel oder bewegtem Optikkopf.

Figur 2 zeigt eine qualitative Darstellung des durch eine Fresnel-Linse eingeführten systematischen Laufzeitfehlers in Abhängigkeit vom Abstand. Der dargestellt Verlauf ist typisch für einen biaxialen Aufbau. Das ist also ein Beispiel für die Beziehung zwischen Abstand und Laufzeitfehler, die in der Auswertungseinheit 28 bekannt ist und dort korrigiert wird. Wenn die Beziehung genau genug vorliegt, wird der durch die Fresnel-Linse eingeführte systematische Messfehler vollständig eliminiert.

Die Beziehung zwischen Abstand und Laufzeitfehler wird durch die Eigenschaften der Fresnel-Linse bestimmt und kann deshalb schon bei Auslegung der Empfangsoptik 24 vorab berechnet werden. Beispielsweise wird die Beziehung schon im Optikdesign festgelegt, oder sie wird durch Untersuchungen der Fresnel-Linse bestimmt.

Es ist allerdings denkbar, dass die Position des Lichtflecks auf dem Lichtempfänger 26 gerade für große Objektabstände statistischen Schwankungen unterliegt. Dann ist die allein aus der Fresnel-Linse abgeleitete Korrektur nicht mehr vollständig. Sollte der verbleibende Fehler für die geplante Anwendung zu groß sein, so gibt es noch die Möglichkeit, für jeden Sensor 10 den Messfehler individuell als Abgleichschritt etwa in der Fertigung aufzunehmen und in dem Sensor 10 zu hinterlegen. In der Regel ist eine solche individuelle Kalibrierung aber nicht erforderlich, beziehungsweise sie ist bei extrem hohen Genauigkeitsanforderungen auch unabhängig vom Einsatz der Fresnel-Linse notwendig.

Kenntnis einer stetigen Beziehung wie in Figur 2 dargestellt ist nicht unbedingt erforderlich. Zum einen ist auch eine diskrete Repräsentation mit oder ohne Interpolation verwendbar. Außerdem wird ein erheblicher Anteil des Fehlers schon korrigiert, wenn die Beziehung nur an ganz wenigen Stützstellen bekannt ist, etwa ein Wert bei kleinen Objektabständen und ein Wert bei großen Objektabständen, gegebenenfalls mit einem oder mehreren Zwischenwerten bei mittleren Objektabständen. Selbst der Extremfall einer nur konstant angenäherten Beziehung, in der also nur ein einziger globaler Laufzeitfehler bekannt ist, führt schon zu einer spürbaren Verbesserung. Vorzugsweise wird der globale Laufzeitfehler mittig zwischen den beiden Extremwerten bei fernem und nahem Objektabstand berücksichtigt. In einem unten noch näher erläuterten konkreten Zahlenbeispiel beträgt die Abstandskorrektur an den Extremwerten 1,7 mm und 0 mm. Eine globale Korrektur im Mittelwert 0,85 mm würde dann schon nur noch einen Restfehler von ±0,85 mm übrig lassen.

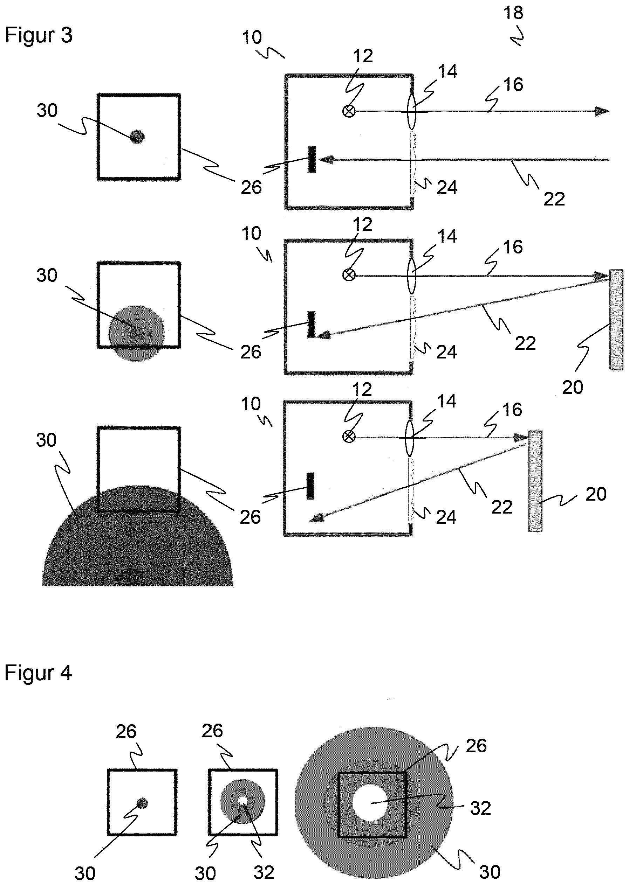

Figur 3 illustriert, welche Bereiche der als Empfangsoptik 24 eingesetzten Fresnel-Linse der remittierte Lichtstrahl 22 bei verschiedenen Objektabständen durchsetzt. Der linke Teil der Figur 3 ist jeweils eine Draufsicht auf den Lichtempfänger 26 mit dem Empfangslichtfleck 30, während rechts der Sensor 10 und sein Strahlengang dargestellt ist. Dabei zeigt Figur 3 drei Objektabstände, nämlich von oben nach unten das Objekt 10 im Fernbereich, in einem mittleren Entfernungsbereich und im extremen Nahbereich. Der Sensor 10 hat in diesem Beispiel einen biaxialen Aufbau, d. h. die optischen Achsen von Lichtsender 12 und Lichtempfänger 26 beziehungsweise Sendeoptik 14 und Empfangsoptik 24 sind parallel zueinander ausgerichtet, aber seitlich zueinander versetzt.

Wie in Figur 3 deutlich zu erkennen, verschiebt sich der Empfangslichtfleck 30 mit kleiner werdendem Abstand des Objekts 20 durch Triangulation lateral auf dem Lichtempfänger 26, bis bei ganz extremen kurzen Abständen gar kein Licht mehr auf den Lichtempfänger 26 fällt. Zugleich wird der Empfangslichtfleck 30 für nähere Objekte 20 immer größer. Die Grauschattierung des Empfangslichtflecks 30 in Figur 3 deutet die unterschiedlichen von dem remittierten Lichtstrahl 22 durchlaufenen Fresnel-Zonen an. Während für große Objektabstände noch Empfangslicht über alle Fresnel-Zonen registriert wird und somit auch alle Fresnel-Zonen zum systematischen Abstandsmessfehler beitragen, treffen bei sehr nahem Objekt 20 nur noch Lichtstrahlen der äußersten Fresnel-Zone auf den Lichtempfänger 26. Der Abstandsmessfehler wird also mit kleinerem Objektabstand zunehmend von den äußeren Fresnel-Zonen bestimmt.

Dieser Effekt ist nicht auf einen biaxialen Aufbau beschränkt. Figur 4 zeigt zum Vergleich von links nach rechts den Empfangslichtfleck 30 auf dem Lichtempfänger 26 bei großem, mittlerem und kleinem Objektabstand in einem koaxialen Aufbau des Sensors 10, bei dem also die optischen Achsen von Sende- und Empfangspfad zusammenfallen. Der zugehörige Sensoraufbau ist bekannt und nicht mehr eigens illustriert.

Der Empfangslichtfleck 30 verschiebt sich nun mangels Triangulationsbasis zwar nicht, wird aber auch hier für näher rückende Objekte 20 immer größer beziehungsweise unschärfer. Dadurch fällt im Nahbereich nur noch das Licht der inneren oder innersten Fresnel-Zone auf den Lichtempfänger. Die Korrektur muss demnach natürlich quantitativ angepasst werden, ist aber vom Prinzip her ganz genauso möglich. Bei einem echt koaxialen Aufbau, in dem der Lichtsender physisch vor dem Lichtempfänger angeordnet ist, kommt es außerdem noch zu einer Kernabschattung, also einem mittigen Loch 32 im Empfangslichtfleck, das ebenfalls bei näheren Objekten 20 anwächst.

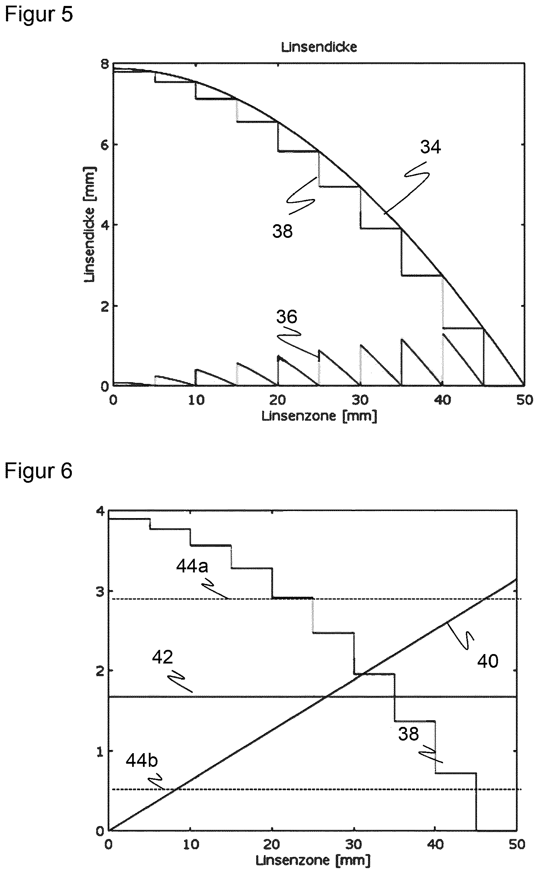

Es folgt nun noch eine quantitative Betrachtung der Korrektur der durch die Fresnel-Linse eingeführten Laufzeitunterschieden, und zwar zunächst allgemein und dann zur Veranschaulichung auch mit einem Zahlenbeispiel unter Bezugnahme auf die Figuren 5 und 6.

Wie zuvor in Figur 3 gesehen, durchläuft beim biaxialen Aufbau der remittierte Lichtstrahl 22 für große Abstände des Objekts 20 alle Fresnel- oder Linsenzonen gleichmäßig und wird dann zu einem scharfen Empfangslichtfleck 30 auf dem Lichtempfänger 26 fokussiert. Je nach durchlaufener Linsenzone haben die detektierten Teilstrahlen also einen individuellen Abstandsfehler aufgesammelt, der dem Dickenunterschied ihrer Linsenzone zu der entsprechenden Dicke einer klassischen Linse im entsprechenden Teilbereich entspricht. Als Referenzwert für den Abstandsfehler wird der Linsenrand definiert, der bei den hier betrachteten Sammellinsen für Linsen klassischer Bauart und für Fresnellinsen gleich dick ist. Am Linsenrand ist daher der Abstandsfehler definitionsgemäß gleich Null. Da die Linsenzonen nach außen hin proportional mehr zur Gesamtfläche der Linse beitragen, liegt der mit der Teilfläche der jeweiligen Linsenzone gewichtet über alle Linsenzonen gemittelte Abstandsfehler bei circa

$$\textit{Abstandsfehler Fernbereich} = \ \sim\!0{,}4 * (n-1) * d$$

wobei 0,4 ein grober Schätzwert ist (der exakte Wert hängt von der Linsenform ab), und n der Brechungsindex des Linsenmaterials. Die Größe d ist ungefähr die "effektive Mittendicke", also die Differenz zwischen der realen Mittendicke und der Randdicke der Linse, genauer betrachtet ist d die Differenz zwischen der Mittendicke der klassischen Linse und der Maximaldicke der Fresnellinse (die aber typischerweise deutlich kleiner ist).

Für sehr nahe Objekte 20 wandert der Empfangslichtfleck 30 auf dem Lichtempfänger 26 zur Seite und vergrößert sich stark. Für ein Objekt 20 im extremen Nahbereich trifft dann nur noch Licht den Lichtempfänger 26, das durch die äußerste Fresnel-Zone gelaufen ist, wo der Abstandsfehler definitionsgemäß verschwindet. Dort beträgt der Abstandsfehler dann

$$\textit{Abstandsfehler Nahbereich} = (n-1) * 0 = \sim\!0$$

Zwischen diesen beiden Extremen erzeugt die Fresnel-Linse Messfehler für variable Abstände des Objektes 20 unterschiedliche Laufzeitfehler. Insgesamt durchlauft der Abstandsfehler einen Hub, d. h. Maximalwert minus Minimalwert, von

$$\textit{Hub Abstandsmessfehler} = \ = \sim\!0{,}4 * (n-1) * d$$

Um die Größenordnung zu beleuchten, würden bei einer Fresnel-Linse, die einer klassischen Empfangslinse mit Mittendicke d = 8 mm und Brechungsindex n = 1.5 entspricht, die nötigen Korrekturwerte maximal einen Wertebereich von 1,7 mm durchlaufen. Weiter unten folgt das genauere Zahlenbeispiel.

Eine erhebliche Verbesserung des Messfehlers wird bereits erreicht, wenn nur anhand der Abstandsfehler im Nahbereich und Fernbereich und eventuell einer oder mehrerer Zwischenwerte und einem qualitativen Verlauf wie in Figur 2 korrigiert wird. Dabei wird eine feste Korrektur für jeweils einen großen Abstandsbereich, im Extremfall sogar nur eine globale konstante Korrektur für alle Abstände verwendet oder interpoliert.

Solche Näherungen können ausreichen, sind aber nicht notwendig. Vielmehr kann recht einfach aus den Eigenschaften der Fresnel-Linse, vorzugsweise bereits beim Optik-Design, berechnet werden, für welchen Objektabstand welche Linsenzonen mit welchem relativen Lichtanteil durchlaufen werden. Daraus resultiert dann die genaue Beziehung zwischen Abstand und durch die Fresnel-Linse eingeführtem Abstandsmessfehler, welche die Auswertungseinheit 28 für die Korrektur verwenden kann. Diese Korrektur ist dann nicht mehr nur eine Näherung, die einen Großteil des durch die Fresnel-Linse verursachten Abstandsfehlers kompensiert, sondern vielmehr dazu geeignet, diesen Abstandsfehler praktisch auf Null zu reduzieren. Wenn die Zahlenwerte dieser Korrekturbeziehung schon beim Optik-Design berechnet werden, dann ist hierfür im Produktionsprozess der Abstandsmessgeräte keine Geräte-individuelle Messung mehr notwendig.

Wie für den soeben betrachteten biaxialen Aufbau gilt auch für den koaxialen Aufbau ein

$$\textit{Abstandsfehler Fernbereich} = \sim\!0{,}4 * (n-1) * d$$

Abweichend ist dann aber der

$$\textit{Abstandsfehler Nahbereich} = \sim(n-1) * d$$

Denn im Nahbereich wird nur noch Licht durch die Linsenmitte empfangen.

Es ergibt sich also ein vergrößerter

$$\textit{Hub Abstandsmessfehler} = \sim0{,}6 * (n-1) * d$$

Demzufolge ist quantitativ die Beziehung zwischen Abstand und durch die Fresnel-Linse eingeführtem Abstandsmessfehler eine andere. An dem Prinzip der Korrektur des Abstandsmessfehlers ändert sich aber nichts.

In einem konkreten Zahlenbeispiel wird eine Linse mit Brechungsindex n=1.5, Brennweite f=100 mm und Blendenzahl k=1, d. h. Linsendurchmesser 100 mm, angenommen. Diese Linse hat eine Mittendicke von d = 8 mm, und die Fresnel-Stufen sind jeweils 5 mm breit. Die genannten Zahlenwerte, insbesondere die Mittendicke und die Fresnel-Stufen, sind rein beispielhaft und ohne Beachtung der Frage gewählt, ob sie tatsächlich für den Sensor 10 geeignet wären.

Figur 5 veranschaulicht die Linsendicke in Abhängigkeit von der Linsenzone. Dargestellt sind zunächst eine kontinuierliche Linie 34 der Außenkontur einer klassischen Linse und eine sägezahnartige Linie 36 der Außenkontur einer entsprechenden Fresnel-Linse. Jede Linsenzone der Fresnel-Linse hat einen individuellen Dickenunterschied zur klassischen Linse, der durch eine Treppenlinie 38 dargestellt ist.

Dieser Dickenunterschied multipliziert mit der Brechzahldifferenz (n-1) entspricht dem systematischen Abstandsmessfehler, den diese individuelle Linsenzone verursacht. Figur 6 zeigt nochmals die entsprechende reskalierte Treppenlinie 38 aus Figur 5. Außerdem hat jede Linsenzone einen nach Außen zunehmenden Flächenanteil an der Gesamtfläche der Linse, die durch eine Linie 40 repräsentiert ist. Aus den jeweiligen Abstandsmessfehlern der Linsenzonen, den Flächenanteilen der Linsenzonen und den auf dem Lichtempfänger 26 registrierten zu den jeweiligen Linsenzonen gehörigen Lichtanteilen des Empfangslichtflecks 30 kann nun für jeden Abstand des Objekts 20 der resultierende Abstandsfehler berechnet werden.

Exemplarisch wird aus den Daten der Figur 6 ein Fehler für große Abstände des Objekts 20 berechnet, der alle Fresnel-Zonen durchsetzt. Das ist dann der mit den Flächenanteilen 40 gewichtete Mittelwert der Abstandsfehler 38 aller Fresnel-Zonen. Dieser Mittelwert 42 ergibt sich hier zu 1,67 mm bei einer Standardabweichung 44a-b von 1,21 mm.

Für großen Objektabstand ist also der mit der beispielhaften Fresnel-Linse gemessene Abstand systematisch um 1,7 mm verfälscht. Außerdem wird bei einem Pulsverfahren die Dauer der empfangenen Lichtpulse um eine Standardabweichung von 1,2 mm verbreitert. Bei einer typischen Lichtpulsdauer von 5ns entsprechend 1.500 mm ist das vernachlässigbar. Für kleine Objektabstände ergibt sich in diesem Beispiel definitionsgemäß ein systematischer Fehler von 0 mm. Die Abstandskorrektur in der Auswertungseinheit 28 durchläuft demnach einen Wertebereich von 1,7 mm. Dieser Wertebereich des Abstandsfehlers ist wie oben dargelegt für Linsen mit größerer Mittendicke, oder andere Linsenform, sowie für koaxialen Aufbau deutlich größer. Die Abstandskorrektur kann je nach Ausführungsform und Genauigkeitsanforderungen durch konstante Korrektur in einem diskreten Nah- und Fernbereich, eine lineare Interpolation, eine Interpolation mit einem qualitativen Verlauf wie in Figur 2, auch unter Einbeziehung Berechnung weiterer Stützstellen für mittlere Abstände geschehen. Besonders bevorzugt ist eine Bestimmung der Beziehung schon im Optikdesign, sei es diskret an wenigen Stützstellen, an zahlreichen Stützstellen oder sogar quasi-analytisch mit einer zumindest nahezu lückenlosen Rechenvorschrift.

**Patentansprüche**

**1.** Entfernungsmessender optoelektronischer Sensor (10) zur Erfassung eines Objekts (20) in einem Überwachungsbereich (18) mit einem Lichtsender (12) zum Aussenden eines Lichtstrahls (16), mit einem Lichtempfänger (26) zum Erzeugen von Empfangssignalen aus dem an dem Objekt (20) remittierten Lichtstrahl (22), mit einer dem Lichtempfänger (26) vorgeordneten Empfangsoptik (24) zur Bündelung des remittierten Lichtstrahls (22) auf den Lichtempfänger (26) sowie mit einer Auswertungseinheit (28), die dafür ausgebildet ist, aus einer Lichtlaufzeit zwischen Aussenden des Lichtstrahls (16) und Empfangen des remittierten Lichtstrahls (22) einen Abstand des Objekts (20) zu bestimmen, wobei die Empfangsoptik eine Fresnel-Linse (24) oder eine Gürtellinse aufweist, **dadurch gekennzeichnet dass** die Auswertungseinheit (28) dafür ausgebildet ist, den Abstand aus einer Beziehung zwischen gemessenem Abstand und einer durch die Fresnel-Linse (24) oder die Gürtellinse eingeführten Laufzeitabweichung zu korrigieren.

**2.** Sensor (10) nach Anspruch 1,
wobei die Beziehung in Form von Wertepaaren aus Abstand und Laufzeitabweichung aufgrund der Fresnel-Linse (24) oder der Gürtellinse gespeichert ist, insbesondere nur punktuell für den Nahbereich und den Fernbereich oder den Nahbereich, einen mittleren Bereich und den Fernbereich.

**3.** Sensor (10) nach Anspruch 1 oder 2,
wobei die Auswertungseinheit (28) dafür ausgebildet ist, die Beziehung zu interpolieren.

**4.** Sensor (10) nach einem der vorhergehenden Ansprüche,
wobei die Beziehung als Formel gespeichert ist.

**5.** Sensor (10) nach einem der vorhergehenden Ansprüche,
wobei die Gürtellinse als Fresnel-Linse (24) mit einem äußeren TIR-Bereich ausgebildet ist.

**6.** Sensor (10) nach einem der vorhergehenden Ansprüche,
wobei Lichtsender (12) und Lichtempfänger (26) in einem biaxialen Aufbau mit ihren optischen Achsen parallel zueinander ausgerichtet sind.

**7.** Sensor (10) nach einem der Ansprüche 1 bis 5,
wobei Lichtsender (12) und Lichtempfänger (26) in einem koaxialen Aufbau mit gleichen optischen Achsen ausgerichtet sind.

**8.** Sensor (10) nach einem der vorhergehenden Ansprüche,
der als Laserscanner ausgebildet ist und dafür eine bewegliche Ablenkeinheit zur periodischen Ablenkung des Lichtstrahls (16, 22) in dem Überwachungsbereich (18) aufweist.

**9.** Verfahren zur Erfassung und Entfernungsbestimmung eines Objekts (20) in einem Überwachungsbereich (18), bei dem ein Lichtstrahl (16) ausgesandt, nach Remission an dem Objekt (20) durch eine Empfangsoptik (24) wieder empfangen und aus der Laufzeit zwischen Aussenden und Empfangen ein Abstand des Objekts (20) bestimmt wird, wobei die Empfangsoptik eine Fresnel-Linse (24) oder eine Gürtellinse aufweist, **dadurch gekennzeichnet, dass** der Abstand aus einer Beziehung zwischen gemessenem Abstand und einer durch die Fresnel-Linse (24) oder die Gürtellinse eingeführten Laufzeitabweichung korrigiert wird.

**10.** Verfahren nach Anspruch 9,
wobei die Beziehung im Optikdesign der Fresnel-Linse (24) oder der Gürtellinse mitbestimmt wird.

**Claims**

**1.** A distance-measuring sensor (10) for the detection of an object (20) in a monitoring area (18), the sensor (10) comprising a light transmitter (12) for transmitting a light beam (16), a light receiver (26) for generating reception signals from the remitted light beam (22) remitted by the object (20), reception optics (24) arranged in front of the light receiver (26) for focusing the remitted light beam (22) on the light receiver (26) and an evaluation unit (28) configured to determine a distance of the object (20) from light time of flight between transmission of the light beam (16) and reception of the remitted light beam (22), wherein the reception optics comprise a Fresnel lens (24) or a belt lens,
**characterized in that** the evaluation unit (28) is configured to correct the distance from a relation between measured distance and a time of flight deviation introduced by the Fresnel lens (24) or the belt lens.

**2.** The sensor (10) according to claim 1,
wherein the relation is stored as pairs of distance and time of flight deviation due to the Fresnel lens (24) or the belt lens, in particular only at selected point for the near range and the far range, or for the near range, an intermediate range and the far range.

**3.** The sensor (10) according to claim 1 or 2,
wherein the evaluation unit (28) is configured to interpolate the relation.

**4.** The sensor (10) according to any of the preceding claims,

wherein the relation is stored as a formula.

5. The sensor (10) according to any of the preceding claims,
   wherein the belt lens is configured as a Fresnel lens (24) having an outer TIR region.

6. The sensor (10) according to any of the preceding claims,
   wherein light transmitter (12) and light receiver (26) are arranged with parallel optical axes in a biaxial arrangement.

7. The sensor (10) according to any of claims 1 to 5,
   wherein light transmitter (12) and light receiver (26) have coinciding optical axes in a coaxial arrangement.

8. The sensor (10) according to any of the preceding claims,
   which is configured as a laser scanner having a movable deflection unit for periodically deflecting the light beams (16, 22) in the monitoring area (18).

9. A method for detecting objects (20) in a monitoring area (18) and determining their distance, wherein a light beam (16) is transmitted and is received through reception optics (24) after being remitted by the object (20), and wherein a distance of the object (20) is determined from a time of flight between transmission and reception, wherein the reception optics comprise a Fresnel lens (24) or a belt lens, **characterized in that** the distance is corrected from a relation between measured distance and a time of flight deviation introduced by the Fresnel lens (24) or the belt lens.

10. The method of claim 9,
    wherein the relation is determined during optics design of the Fresnel lens (24) or the belt lens.


**Revendications**

1. Capteur télémétrique optoélectronique (10) pour la détection d'un objet (20) dans une zone à surveiller (18), comportant un émetteur de lumière (12) pour émettre un rayon lumineux (16), un récepteur de lumière (26) pour générer des signaux de réception à partir du rayon lumineux (22) réémis par l'objet (20), une optique de réception (24) agencée en amont du récepteur de lumière (26) et destinée à focaliser le rayon lumineux réémis (22) sur le récepteur de lumière (26), ainsi qu'une unité d'évaluation (28) réalisée pour déterminer à partir d'un temps de parcours de lumière entre l'émission du rayon lumineux (16) et la réception du rayon lumineux réémis (22) une distance de l'objet (20), dans lequel l'optique de réception comprend une lentille de Fresnel (24) ou une lentille à échelons, **caractérisé en ce que** l'unité d'évaluation (28) est réalisée pour corriger la distance à partir d'une relation entre la distance mesurée et une déviation du temps de parcours incitée par la lentille de Fresnel (24) ou par la lentille à échelons.

2. Capteur (10) selon la revendication 1,
   dans lequel la relation est mémorisée sous forme de paires de valeurs de la distance et de la déviation de temps de parcours due à la lentille de Fresnel (24) ou à la lentille à échelons, en particulier seulement ponctuellement pour la zone proche et pour la zone lointaine ou pour la zone proche, une zone moyenne et la zone lointaine.

3. Capteur (10) selon la revendication 1 ou 2,
   dans lequel l'unité d'évaluation (28) est réalisée pour interpoler la relation.

4. Capteur (10) selon l'une des revendications précédentes,
   dans lequel la relation est mémorisée sous forme de formule.

5. Capteur (10) selon l'une des revendications précédentes,
   dans lequel la lentille à échelons est réalisée sous forme de lentille de Fresnel (24) ayant une zone TIR extérieure.

6. Capteur (10) selon l'une des revendications précédentes,
   dans lequel l'émetteur de lumière (12) et le récepteur de lumière (26) ont leurs axes optiques orientés parallèlement l'un à l'autre dans une structure biaxiale.

7. Capteur (10) selon l'une des revendications 1 à 5,
   dans lequel l'émetteur de lumière (12) et le récepteur de lumière (26) sont orientés en ayant des axes optiques identiques dans une structure coaxiale.

8. Capteur (10) selon l'une des revendications précédentes,
qui est réalisé sous forme de scanneur laser et qui comprend à cet effet une unité de déviation mobile (18) pour la déviation périodique du rayon lumineux (16, 22) dans la zone à surveiller (18).

9. Procédé pour la détection et la détermination de la distance d'un objet (20) dans une zone à surveiller (18), dans lequel un rayon lumineux (16) est émis, il est reçu par une optique de réception (24) après réémission par l'objet (20), et à partir du temps de parcours entre l'émission et la réception, une distance de l'objet (20) est déterminée, dans lequel l'optique de réception comprend une lentille de Fresnel (24) ou une lentille à échelons, **caractérisé en ce que** la distance est corrigée à partir d'une relation entre la distance mesurée et une déviation du temps de parcours incitée par la lentille de Fresnel (24) ou par la lentille à échelons.

10. Procédé selon la revendication 9,
dans lequel la relation est déterminée dans la conception optique de la lentille de Fresnel (24) ou de la lentille à échelons également.

Figur 1

Figur 2

Figur 3

Figur 4

Figur 5

Linsendicke

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19757849 B4
- US 5311271 A
- US 4829172 A